# FASCICULE DE BREVET EUROPEEN

(11) **EP 2 348 224 B1**
(45) Date de publication et mention de la délivrance du brevet: **17.10.2012**
(21) Numéro de dépôt: 10191690.6
(22) Date de dépôt: 18.11.2010
(51) Int. Cl.: F16D 13/58

(54) **Embrayage comportant un diaphragme avec un prolongement destiné notamment à commander un dispositif accessoire de l'embrayage**
Kupplung mit einer Membranfeder die eine Verlängerung insbesondere zur Betätigung eines Zubehörteils der Kupplung aufweist
Coupling comprising a diaphragm spring with an extension especially for actuating an accessory device of the coupling

(30) Priorité: 26.01.2010 FR 1050481
(43) Date de publication de la demande: 27.07.2011
(73) Titulaire: Valeo Embrayages, 80009 Amiens Cedex 2 (FR)
(72) Inventeur: Perry, Benoît, 80260 Pierregot (FR); Brabander, Xavier, 80450 Camon (FR)

(56) Documents cités:
- EP-A1- 1 958 713
- DE-A1-102006 019 976
- DE-B1- 1 575 781
- FR-A1- 2 583 484
- FR-A1- 2 753 503

## Description

La présente invention concerne un embrayage, notamment pour véhicule automobile, comportant un mécanisme à diaphragme perfectionné destiné notamment à commander un dispositif accessoire de l'embrayage.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe rotatif mené est généralement couplé à un arbre de boîte de vitesses.

L'embrayage comporte au moins un mécanisme entraîné en rotation par l'organe menant. Ce mécanisme comprend un couvercle, un diaphragme et un plateau de pression, tous liés en rotation avec l'organe menant.

Au repos, le diaphragme a une forme générale tronconique.

Afin de coupler les organes rotatifs menant et mené, le diaphragme enserre un disque de friction, lié en rotation avec l'organe rotatif mené, entre le plateau de pression et un plateau de réaction solidaire en rotation du couvercle.

On connaît déjà dans l'état de la technique, notamment d'après FR-A-2 753 503, un embrayage, notamment pour véhicule automobile, comportant un mécanisme comprenant un couvercle, de forme générale de révolution, dans lequel est logé au moins un diaphragme articulé sur le couvercle.

Le diaphragme comprend une extrémité d'action, radialement interne par rapport aux moyens d'articulation de ce diaphragme sur le couvercle, et une extrémité de réaction, radialement externe par rapport à ces moyens d'articulation.

On notera que le diaphragme décrit dans FR-A-2 753 503 forme un levier du premier genre car les moyens d'articulation du diaphragme sont agencés entre les extrémités d'action et de réaction de ce diaphragme.

L'extrémité d'action du diaphragme est munie de fentes radiales, régulièrement espacées circonférentiellement, délimitant des doigts radiaux. Chaque fente est munie d'une extrémité radialement interne ouverte et d'une extrémité radialement externe fermée.

L'extrémité radialement interne des doigts radiaux est libre et destinée à coopérer avec une butée de commande.

L'extrémité de réaction du diaphragme comprend une partie annulaire, dite partie Belleville, s'étendant radialement depuis les extrémités fermées des fentes radiales vers le bord périphérique radialement externe du diaphragme. La partie Belleville forme des moyens élastiques à action axiale destinés à solliciter un plateau de pression du mécanisme.

Comme évoqué dans FR-A-2 691 221, la courbe de variation de la force élastique d'un diaphragme en fonction de sa course de déformation présente une forme générale caractéristique «ensellée». Sur cette courbe caractéristique, on observe que, lorsque la course de déformation du diaphragme croît, tout d'abord la force élastique du diaphragme croît puis, après passage par un maximum, cette force élastique décroît suivant une pente négative qui est d'autant plus élevée que « l'ensellement » de la courbe est prononcé.

L'ensellement est caractérisé notamment par le rapport h/e, h étant la hauteur du tronc de cône de la partie Belleville mesurée parallèlement à un axe de révolution du diaphragme et e étant l'épaisseur de cette partie Belleville. A épaisseur e constante, plus la dimension radiale de la partie Belleville est élevée, plus l'ensellement est prononcé.

Lorsque la chaîne de commande de la butée d'actionnement du diaphragme comprend des moyens hydrauliques ou pneumatiques, l'utilisation d'un diaphragme dont la courbe caractéristique présente un ensellement prononcé risque dans certains cas de limiter la fiabilité du fonctionnement de cette chaîne de commande ou de créer un inconfort pour l'utilisateur de l'embrayage. On préfère donc, pour de telles applications, utiliser un diaphragme dont la courbe caractéristique présente un ensellement atténué.

La partie Belleville du diaphragme de l'embrayage décrit dans FR-A-2 753 503 comprend un prolongement, radialement externe, destiné à venir en contact avec un organe de commande d'un dispositif accessoire de l'embrayage. Dans FR-A-2 753 503, ce dispositif accessoire est plus particulièrement un dispositif de rattrapage d'usure agencé entre le diaphragme et le plateau de pression. Un tel dispositif de rattrapage d'usure est destiné à compenser la variation de l'épaisseur du disque de friction, et donc la variation de la course du plateau de pression, due à l'usure du disque de friction.

Le prolongement de contact du diaphragme décrit dans FR-A-2 753 503 est localisé sur un secteur très restreint de la périphérie du diaphragme et n'a pratiquement aucun effet sur l'ensellement de la courbe caractéristique du diaphragme par rapport à l'ensellement de la courbe caractéristique d'un diaphragme ayant une partie Belleville de même dimension radiale mais sans prolongement localisé de contact.

Toutefois, du fait qu'il est localisé, le prolongement de contact du diaphragme décrit dans FR-A-2 753 503 rompt la symétrie de ce diaphragme autour de son axe géométrique de révolution et crée une complexité de fabrication de ce diaphragme.

On a donc proposé dans l'état de la technique un diaphragme muni d'une partie Belleville venant directement en contact avec un organe de commande d'un dispositif de rattrapage d'usure. Cependant, dans ce cas, pour permettre le contact avec l'organe de commande du dispositif de rattrapage d'usure, la dimension radiale de la partie Belleville du diaphragme doit être relativement importante ce qui aboutit à une courbe caractéristique du diaphragme présentant un ensellement prononcé.

L'invention a notamment pour but de proposer un embrayage comprenant un diaphragme susceptible de venir en contact avec un organe de commande d'un dispositif accessoire de l'embrayage, ce diaphragme étant facile à fabriquer et présentant une courbe caractéristique avec un ensellement relativement atténué.

A cet effet, l'invention a pour objet un embrayage, notamment pour véhicule automobile, du type comportant un mécanisme comprenant un couvercle, de forme générale de révolution, dans lequel est logé un diaphragme articulé sur le couvercle à l'aide de moyens d'articulation, le diaphragme étant muni
- d'une extrémité de réaction, radialement externe par rapport aux moyens d'articulation, destinée à solliciter un plateau de pression, cette extrémité de réaction comprenant une partie annulaire dite partie Belleville et un prolongement destiné à venir en contact avec un organe de commande d'un dispositif accessoire de l'embrayage, et
- d'une extrémité d'action, radialement interne par rapport aux moyens d'articulation, destinée à coopérer avec une butée de commande,
caractérisé en ce que l'extrémité de réaction comprend également une partie annulaire, radialement externe par rapport à la partie Belleville, formant le prolongement de contact,
la dimension radiale de la partie Belleville étant supérieure à la dimension radiale du prolongement annulaire de contact,
l'épaisseur de la partie Belleville étant supérieure à l'épaisseur du prolongement annulaire de contact.

On a constaté que, dans l'embrayage selon l'invention, le prolongement annulaire de contact, dont les dimensions vérifient les proportions ci-dessus, n'a pratiquement aucun effet sur l'ensellement de la courbe caractéristique du diaphragme par rapport à l'ensellement de la courbe caractéristique d'un diaphragme ayant une partie Belleville de même dimension radiale mais sans prolongement annulaire.

Ainsi, l'invention permet de commander un dispositif accessoire de l'embrayage, tel qu'un dispositif de rattrapage d'usure, au moyen d'un prolongement de la partie Belleville du diaphragme, ceci sans augmenter l'ensellement de la courbe caractéristique de ce diaphragme grâce à l'épaisseur réduite et à la relativement faible dimension radiale du prolongement annulaire.

Par ailleurs, le prolongement annulaire de contact ne rompt pas la symétrie du diaphragme autour de son axe de révolution, si bien que la fabrication du diaphragme de l'embrayage selon l'invention reste simple à réaliser. Le prolongement annulaire peut être fabriqué par enlèvement ou écrasement de matière.

Suivant d'autres caractéristiques optionnelles de l'invention:
- l'épaisseur du prolongement annulaire de contact est comprise entre 1/5 et 1/2 de l'épaisseur de la partie Belleville;
- le prolongement annulaire de contact est formé par au moins un décrochement d'une face délimitant l'extrémité de réaction du diaphragme;
- le décrochement est délimité par un congé;
- le prolongement annulaire de contact est formé par deux décrochements de deux faces opposées délimitant l'extrémité de réaction du diaphragme, les dimensions radiales des deux décrochements étant identiques ou différentes;
- le prolongement annulaire de contact est délimité par un biseau formé dans l'extrémité de réaction du diaphragme;
- le prolongement annulaire de contact est destiné à venir en contact avec un organe de commande d'un dispositif de rattrapage d'usure.

L'invention sera mieux comprise à la lecture de la description qui va suivre, donnée uniquement à titre d'exemple et faite en se référant aux dessins dans lesquels :
- la figure 1 est une vue en coupe axiale d'un mécanisme d'un embrayage selon l'invention;
- la figure 2 est une vue en perspective d'un diaphragme du mécanisme représenté sur la figure 1 ;
- la figure 3 est une vue en coupe suivant la ligne III - III de la figure 2, à échelle agrandie par rapport à cette figure 2 ;
- les figures 4 et 5 sont des vues analogues à la figure 3 relatives respectivement à des première et seconde variantes de réalisation du diaphragme.

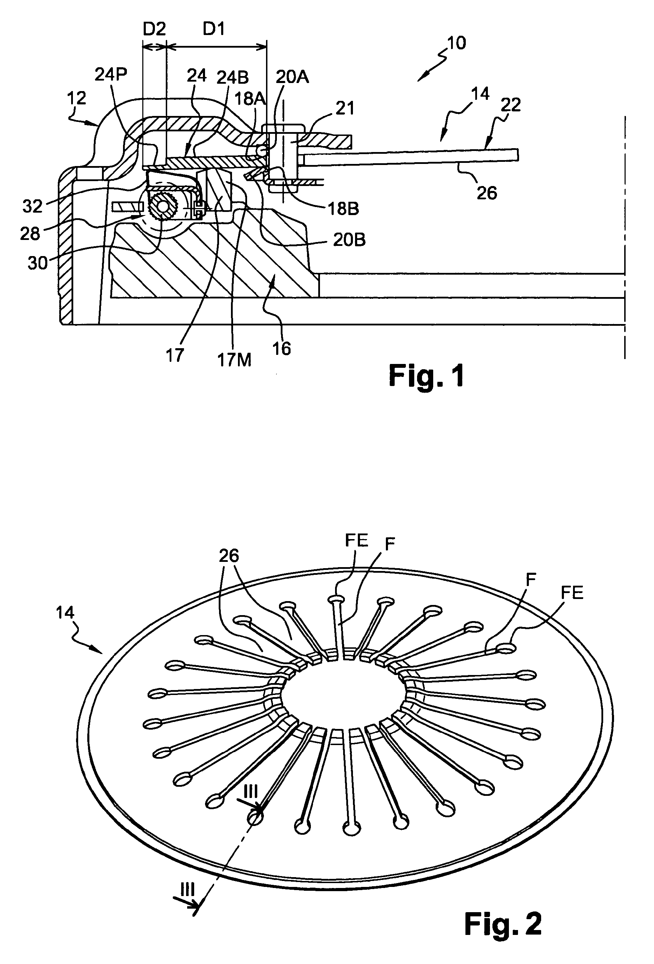

On a représenté sur la figure 1 un mécanisme d'un embrayage pour véhicule automobile selon un premier mode de réalisation de l'invention. Ce mécanisme est désigné par la référence générale 10.

Le mécanisme 10 comporte un couvercle 12, habituellement en tôle métallique, de forme générale de révolution, dans lequel est logé un diaphragme 14, habituellement en acier traité. Le diaphragme 14 est destiné à solliciter un plateau de pression 16 de manière à enserrer un disque de friction (non représenté) contre un plateau de réaction (non représenté).

Le plateau de pression 16 est muni d'une saillie axiale annulaire, appelée cordon d'appui 17, avec laquelle coopère le diaphragme 14. Le cordon 17 comporte une partie mobile 17M déplaçable notamment suivant une composante axiale.

Le diaphragme 14 forme un levier articulé sur le couvercle 12 à l'aide de moyens visibles sur la figure 1. Ces moyens d'articulation comprennent des première 18A et seconde 18B formes d'appui, agencées sensiblement en vis à vis, entre lesquelles est pincé le diaphragme. Ces première 18A et seconde 18B formes d'appui sont portées par le couvercle 12 et ont des profils bombés assurant un pivotement efficace du diaphragme 14.

Dans l'exemple décrit, les première 18A et seconde 18B formes d'appui sont ménagées respectivement sur des premier 20A et second 20B organes d'appui portés par une série d'éléments axiaux d'articulation 21 disposés en couronne et fixés sur le couvercle 12.

Le premier organe d'appui 20A est un anneau torique, entourant les éléments d'articulation 21 de manière à être centré par rapport au couvercle 12. Cet anneau 20A est intercalé entre le diaphragme 14 et le couvercle 12 de façon à prendre appui sur ce dernier.

Le second organe d'appui 20B est une bague comportant une zone circonférentielle pliée de manière à former la seconde forme d'appui 18B. Cette bague 20B entoure elle aussi les éléments d'articulation 21.

On notera que d'autres moyens connus d'articulation du diaphragme 14 sont compatibles avec la présente invention.

Le diaphragme 14 comprend une extrémité d'action 22, radialement interne par rapport aux moyens d'articulation de ce diaphragme sur le couvercle 12, et une extrémité de réaction 24, radialement externe par rapport à ces moyens d'articulation. Le diaphragme 14 forme donc un levier du premier genre car les moyens d'articulation du diaphragme 14 sont agencés entre les extrémités d'action 22 et de réaction 24 de ce diaphragme 14.

En se référant à la figure 2, on voit que l'extrémité d'action 22 du diaphragme est munie de fentes radiales F, régulièrement espacées circonférentiellement, délimitant des doigts radiaux 26. Chaque fente F est munie d'une extrémité radialement interne ouverte et d'une extrémité FE radialement externe fermée. Plus particulièrement, l'extrémité fermée FE de chaque fente F a une forme générale partiellement circulaire formant un orifice d'accrochage du diaphragme 14 sur un élément d'articulation correspondant 21.

L'extrémité radialement interne des doigts radiaux 26 est libre et destinée à coopérer avec une butée de commande classique (non représentée).

L'extrémité de réaction 24 du diaphragme comprend une partie annulaire, dite partie Belleville 24B, formant des moyens élastiques à action axiale destinés à solliciter le plateau de pression 16. Ainsi, en se référant à la figure 1, on voit que la partie Belleville 24B est en contact avec le cordon 17 du plateau, et notamment avec la partie mobile 17M de ce cordon.

L'extrémité de réaction 24 du diaphragme comprend également une partie annulaire, radialement externe par rapport à la partie Belleville 24B, formant un prolongement 24P destiné à venir en contact avec un organe de commande d'un dispositif accessoire de l'embrayage. Dans l'exemple illustré, le dispositif accessoire est un dispositif de rattrapage d'usure classique 28, notamment du type décrit dans FR-A-2 753 503. Le dispositif de rattrapage d'usure est destiné à compenser la variation de l'épaisseur du disque de friction, et donc la variation de la course du plateau de pression 16, due à l'usure du disque de friction.

De façon connue en soit, le dispositif de rattrapage d'usure 28 comprend une roue à rochet 30 avec laquelle coopère un organe élastique 32 formant l'organe de commande de ce dispositif 28. Le prolongement 24P est donc en contact avec l'organe 32.

Conformément à un fonctionnement classique, le dispositif de rattrapage d'usure 28 provoque le déplacement, suivant notamment une composante axiale, de la partie mobile 17M du cordon pour compenser l'usure du disque de friction.

La partie Belleville 24B s'étend radialement depuis les extrémités fermées FE des fentes radiales jusqu'au prolongement de contact 24P.

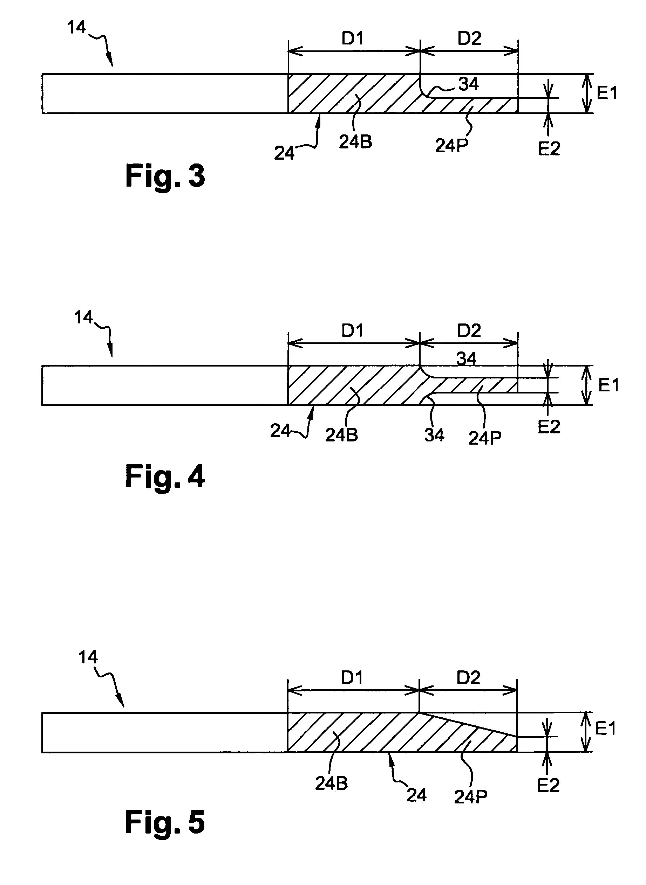

Afin que le prolongement de contact 24P n'ait pratiquement aucun effet sur l'ensellement de la courbe caractéristique du diaphragme 14 par rapport à l'ensellement de la courbe caractéristique d'un diaphragme ayant une partie Belleville de même dimension radiale mais sans prolongement annulaire, les dimensions de ce prolongement de contact 24P et de la partie Belleville 24B vérifient les proportions suivantes (voir par exemple figure 3) :
- la dimension radiale D1 de la partie Belleville 24B est supérieure à la dimension radiale D2 du prolongement de contact 24P, et
- l'épaisseur E1 de la partie Belleville 24B est supérieure à l'épaisseur E2 du prolongement de contact 24P.

De préférence, l'épaisseur E2 du prolongement de contact 24P est comprise entre 1/5 et 1/2 de l'épaisseur E1 de la partie Belleville 24B. En effet, lorsque l'épaisseur E2 est comprise dans cet intervalle, la rigidité du prolongement de contact 24P est suffisante pour coopérer avec l'organe de commande 32 du dispositif de rattrapage d'usure 28 sans pour autant influencer notablement l'ensellement de la courbe caractéristique du diaphragme 14.

En se référant aux figures 1 à 3, on voit que le prolongement de contact 24P est formé par un décrochement de l'une ou l'autre des faces opposées du diaphragme 14 délimitant l'extrémité de réaction 24. Dans l'exemple illustré sur les figures 1 à 3, le prolongement de contact 24P est ménagé dans la face extérieure du diaphragme 14 lorsque l'on considère la forme tronconique générale de ce diaphragme 14. En variante, ce prolongement 24P pourrait être ménagé dans la face intérieure du diaphragme 14, bien que les performances de charge du diaphragme 14 soient un peu moins bonnes dans cette variante.

En se référant plus particulièrement à la figure 3, on voit que le décrochement formant le prolongement de contact 24P est délimité de préférence par un congé 34.

On a représenté sur les figures 4 et 5 des variantes de réalisation du diaphragme 14.

Dans le cas de la figure 4, le prolongement annulaire de contact 24P est formé par deux décrochements ménagés respectivement sur les deux faces opposées du diaphragme délimitant l'extrémité de réaction 24. Les dimensions radiales D2 des deux décrochements sont identiques. En variante, les dimensions radiales des deux décrochements peuvent être différentes. Dans ce cas, on veillera de préférence à ce que la dimension radiale D1 de la partie Belleville 24B soit supérieure à la dimension radiale de chacun des décrochements.

Dans le cas de la figure 5, le prolongement annulaire de contact 24P est délimité par un biseau formé dans l'extrémité de réaction 24 du diaphragme. Dans ce cas, on veillera à ce que l'épaisseur E1 de la partie Belleville 24B soit supérieure à l'épaisseur E2 du prolongement de contact 24P, cette épaisseur E2 étant mesurée à l'extrémité radiale externe du prolongement de contact 24P.

Selon les variantes de réalisation du diaphragme 14, le prolongement de contact 24P peut être formé par enlèvement ou écrasement de matière d'un diaphragme, dont, initialement, toute l'extrémité de réaction 14 a une épaisseur constante, ceci au cours d'une opération facile à intégrer dans un procédé classique de fabrication du diaphragme.

Dans un procédé par enlèvement de matière, on pourra utiliser une plaquette classique d'usinage comprenant un bord d'attaque de la matière ayant un contour partiellement circulaire de rayon sensiblement identique au rayon d'un congé délimitant le prolongement de contact 24P. En variante, on pourra utiliser des moyens classiques de meulage.

Dans un procédé par écrasement de matière on pourra utiliser des moyens classiques de frappe du diaphragme.

On notera que l'invention peut s'appliquer à un embrayage comprenant un mécanisme comportant un seul diaphragme et plusieurs (au moins deux) disques de friction.

Ce type d'embrayage peut transmettre un même couple qu'un embrayage ne comportant qu'un seul disque de friction de dimensions plus importantes. Le diaphragme du mécanisme peut comporter avantageusement un prolongement annulaire de contact tel que décrit plus haut.

Selon une variante de réalisation du diaphragme 14, le prolongement de contact 24P peut être formé avec un angle différent de celui de la partie annulaire Belleville 24B.

On notera que l'invention peut également s'appliquer à un double embrayage.

Un double embrayage permet habituellement de coupler alternativement l'arbre d'un moteur du véhicule avec deux arbres coaxiaux d'entrée d'une boîte de vitesses.

Ainsi, un double embrayage permet de changer de rapport de vitesses tout en maintenant la transmission d'un couple moteur aux roues du véhicule. En effet, un double embrayage comprend habituellement des premier et second embrayages associés respectivement à des rapports de vitesses pairs et impairs. Lors d'un changement de rapport de vitesses, un premier embrayage est débrayé alors que le second embrayage est embrayé si bien que le couple moteur est transféré progressivement du premier au second embrayage. Ainsi, la somme des couples transmis par les premier et second embrayages est toujours sensiblement égale au couple moteur.

Dans un double embrayage, chaque embrayage comprend un mécanisme comportant un diaphragme destiné à coopérer avec un plateau de pression solidaire en rotation du couvercle et de l'arbre du moteur. Le diaphragme d'au moins un mécanisme peut comporter avantageusement un prolongement annulaire de contact tel que décrit plus haut.

Comme un embrayage classique, l'embrayage selon l'invention est destiné à coupler des organes rotatifs menant et mené d'axes de rotation sensiblement alignés. L'invention est particulièrement avantageuse lorsque l'organe rotatif mené est couplé à un arbre de boîte de vitesses robotisée. En effet, dans ce type d'application, on cherche autant que possible à limiter l'ensellement de la courbe caractéristique du diaphragme, comme le permet l'invention.

## Revendications

1. Embrayage, notamment pour véhicule automobile, du type comportant un mécanisme (10) comprenant un couvercle (12), de forme générale de révolution, dans lequel est logé un diaphragme (14) articulé sur le couvercle (12) à l'aide de moyens d'articulation (18A, 18B, 20A, 20B, 21), le diaphragme (14) étant muni
- d'une extrémité de réaction (24), radialement externe par rapport aux moyens d'articulation (18A, 18B, 20A, 20B, 21), destinée à solliciter un plateau de pression (16), cette extrémité de réaction (24) comprenant une partie annulaire dite partie Belleville (24B) et un prolongement (24P) destiné à venir en contact avec un organe (32) de commande d'un dispositif accessoire (28) de l'embrayage, et
- d'une extrémité d'action (22), radialement interne par rapport aux moyens d'articulation, destinée à coopérer avec une butée de commande,
**caractérisé en ce que** l'extrémité de réaction (24) comprend également une partie annulaire, radialement externe par rapport à la partie Belleville (24P), formant le prolongement de contact,
la dimension radiale (D1) de la partie Belleville (24B) étant supérieure à la dimension radiale (D2) du prolongement annulaire de contact (24P),
l'épaisseur (E1) de la partie Belleville (24B) étant supérieure à l'épaisseur (E2) du prolongement annulaire de contact (24P).

2. Embrayage selon la revendication 1, dans lequel l'épaisseur (E2) du prolongement annulaire de contact (24P) est comprise entre 1/5 et 1/2 de l'épaisseur de la partie Belleville (24B).

3. Embrayage selon la revendication 1 ou 2, dans lequel le prolongement annulaire de contact (24P) est formé par au moins un décrochement d'une face délimitant l'extrémité de réaction du diaphragme (24).

4. Embrayage selon la revendication 3, dans lequel le décrochement est délimité par un congé (34).

5. Embrayage selon la revendication 3 ou 4, dans lequel le prolongement annulaire de contact (24P) est formé par deux décrochements de deux faces opposées délimitant l'extrémité de réaction du diaphragme (24), les dimensions radiales des deux décrochements étant identiques ou différentes,

6. Embrayage selon la revendication 1 ou 2, dans lequel le prolongement annulaire de contact (24P) est délimité par un biseau formé dans l'extrémité de réaction du diaphragme (24).

7. Embrayage selon l'une quelconque des revendications précédentes, dans lequel le prolongement annulaire de contact (24P) est destiné à venir en contact avec un organe de commande (32) d'un dispositif de rattrapage d'usure (28).

8. Embrayage selon la revendication 1, dans lequel le prolongement annulaire de contact (24P) est formé avec un angle différent de celui de la partie annulaire Belleville (24B).

## Claims

1. Clutch, in particular for a motor vehicle, of the type comprising a mechanism (10) comprising a cover (12) with a general form of revolution, in which there is accommodated a diaphragm (14) which is articulated on the cover (12) by means of articulation means (18A, 18B, 20A, 20B, 21), the diaphragm (14) being provided with:
- a reaction end (24) which is radially outer relative to the articulation means (18A, 18B, 20A, 20B, 21) and is designed to thrust a pressure plate (16), this reaction end (24) comprising an annular part known as the Belleville part (24B) and an extension (24P) which is designed to come into contact with a unit (32) for control of an accessory device (28) of the clutch; and
- an action end (22), which is radially inner relative to the articulation means, and is designed to co-operate with a control stop,
**characterised in that** the reaction end (24) also comprises an annular part which is radially outer relative to the Belleville part (24P), and forms the contact extension, the radial dimension (D1) of the Belleville part (24B) being greater than the radial dimension (D2) of the annular contact extension (24P),
the thickness (E1) of the Belleville part (24B) being greater than the thickness (E2) of the annular contact extension (24P).

2. Clutch according to claim 1, wherein the thickness (E2) of the annular contact extension (24P) is between 1/5 and 1/2 of the thickness of the Belleville part (24B).

3. Clutch according to claim 1 or 2, wherein the annular contact extension (24P) is formed by at least one set-back in a surface which delimits the reaction end of the diaphragm (24).

4. Clutch according to claim 3, wherein the set-back is delimited by a necking (34).

5. Clutch according to claim 3 or 4, wherein the annular contact extension (24P) is formed by two set-backs in two opposite surfaces which delimit the reaction end of the diaphragm (24), the radial dimensions of the two set-backs being identical or different.

6. Clutch according to claim 1 or 2, wherein the annular contact extension (24P) is delimited by a bevel formed in the reaction end of the diaphragm (24).

7. Clutch according to any one of the preceding claims, wherein the annular contact extension (24P) is designed to come into contact with a control unit (32) of a wear take-up device (28).

8. Clutch according to claim 1, wherein the annular contact extension (24P) is formed with an angle which is different from that of the annular Belleville part (24B).

## Patentansprüche

1. Kupplung, insbesondere für ein Kraftfahrzeug, umfassend einen Mechanismus (10) mit einem Deckel (12) von allgemein umlaufender Art, in dem eine Membranfeder (14) untergebracht ist, die mit Hilfe von Gelenkmitteln (18A, 18B, 20A, 20B, 21) an dem Deckel (12) angelenkt ist, wobei die Membranfeder (14) ausgestattet ist
- mit einem Reaktionsende (24), welches im Bezug zu den Gelenkmitteln (18A, 18B, 20A, 20B, 21) radial außen liegt und dazu bestimmt ist, eine Druckplatte (16) zu beanspruchen, wobei dieses Reaktionsende (24) einen als Tellerfederteil bezeichneten ringförmigen Teil (24B) und eine Verlängerung (24P) umfasst, die dazu bestimmt ist, mit einem Steuerungsorgan (32) einer Zubehörvorrichtung (28) der Kupplung in Kontakt zu kommen, und
- mit einem Aktionsende (22), welches im Bezug zu den Gelenkmitteln radial innen liegt und dazu bestimmt ist, mit einem Betätigungslager zusammenzuwirken,
**dadurch gekennzeichnet, dass** das Reaktionsende (24) außerdem einen ringförmigen Teil umfasst, der im Bezug zu dem Tellerfederteil (24B) radial außen liegt und die Kontaktverlängerung bildet,
wobei die radiale Abmessung (D1) des Tellerfederteils (24B) größer als die radiale Abmessung (D2) der ringförmigen Kontaktverlängerung (24P) ist,
wobei die Dicke (E1) des Tellerfederteils (24B) größer als die Dicke (E2) der ringförmigen Kontaktverlängerung (24P) ist.

2. Kupplung nach Anspruch 1, wobei die Dicke (E2) der ringförmigen Kontaktverlängerung (24P) zwischen 1/5 und 1/2 der Dicke des Tellerfederteils (24B) beträgt.

3. Kupplung nach Anspruch 1 oder 2, wobei die ringförmige Kontaktverlängerung (24P) gebildet ist durch mindestens eine Abnehmung einer Fläche, welche das Reaktionsende (24) der Membranfeder begrenzt.

4. Kupplung nach Anspruch 3, wobei die Abnehmung durch eine Hohlkehle (34) begrenzt ist.

5. Kupplung nach Anspruch 3 oder 4, wobei die ringförmige Kontaktverlängerung (24P) gebildet ist durch zwei Abnehmungen von zwei entgegengesetzten Flächen, welche das Reaktionsende (24) der Membranfeder begrenzen, wobei die radialen Abmessungen der beiden Abnehmungen gleich oder unterschiedlich sind.

6. Kupplung nach Anspruch 1 oder 2, wobei die ringförmige Kontaktverlängerung (24P) begrenzt ist durch eine Abschrägung, die in das Reaktionsende (24) der Membranfeder eingebracht ist.

7. Kupplung nach einem der vorherigen Ansprüche, wobei die ringförmige Kontaktverlängerung (24P) dazu bestimmt ist, mit einem Steuerungsorgan (32) einer Verschleiß-Nachstellvorrichtung (28) in Kontakt zu kommen.

8. Kupplung nach Anspruch 1, wobei die ringförmige Kontaktverlängerung (24P) in einem Winkel ausgebildet ist, der verschieden ist zu demjenigen des ringförmigen Tellerfederteils (24B).
